# EUROPÄISCHE PATENTANMELDUNG

(11) **EP 0 768 135 A1**
(43) Veröffentlichungstag der Anmeldung: **16.04.1997**
(21) Anmeldenummer: 96114681.8
(22) Anmeldetag: 13.09.1996
(51) Int. Cl.: B23B 9/00, B23Q 1/25

(54) **Drehmaschine**

(30) Priorität: 21.09.1995 DE 19535015
(71) Anmelder: Alfred H. Schütte GmbH & Co. KG., D-51105 Köln (DE)
(72) Erfinder: Langer, Detlef, Dr. Ing., 51503 Rösrath (DE)
(74) Vertreter: Hennicke, Albrecht, Dipl.-Ing.

(57) **Zusammenfassung**

Drehmaschine, insbesondere Mehrspindeldrehautomat, dessen einem Querschlitten (22) zugeordnete erste Werkzeugvorschubeinrichtung (21) und dessen einem Längsschlitten (42) zugeordnete zweite Werkzeugvorschubeinrichtung (41) als Kreuzschlitten ausgebildet sind, deren Oberschlitten (23 bzw. 43) mit Übertragungselementen (30 bzw. 50) von Oberschlittenantrieben (31 bzw. 51) betätigt werden, die außerhalb des Arbeitsraumes (10) im Antriebskasten (14) der Maschine angeordnet sind. Hierdurch wird der Arbeitsraum von Antriebsaggregaten freigehalten und mit Hilfe einer Rechnersteuerung eine präzise Führung der Werkzeuge (29 bzw. 52) ermöglicht, die am Werkstück (19) beliebige Außen- und Innenkonturen herstellen können.

## Beschreibung

Die Erfindung betrifft eine Drehmaschine, insbesondere einen Mehrspindeldrehautomaten mit einem einen Arbeitsraum umgebenden Maschinengestell, mit mindestens einer Werkstückspindel und mit mindestens einer Werkzeugvorschubeinrichtung, die einen längs einer ersten Führungsachse bewegbaren Unterschlitten und einen von einem Oberschlittenantrieb längs einer zweiten Führungsachse auf dem Unterschlitten bewegbaren Oberschlitten aufweist, der ein Werkzeug trägt.

Bei Mehrspindeldrehautomaten ist es bekannt, einzelne oder alle Querschlitten mit jeweils einem Zusatzschlitten zu versehen, der als Oberschlitten auf dem Querschlitten senkrecht zu dessen Bewegungsbahn verschiebbar ist und das Werkzeug trägt. Das Werkzeug kann hierdurch in zwei zueinander senkrechten Richtungen in einer Arbeitsebene bewegt werden und an dem zu bearbeitenden Werkstück nacheinander oder gleichzeitig sowohl in Axialrichtung als auch in Radialrichtung arbeiten und hierdurch eine Umfangskontur herstellen. Das Werkzeug muß deshalb nicht selbst nach der am Werkstück herzustellenden Umfangskontur gestaltet sein, sondern es braucht nur aus einem schmalen Stichel od.dgl. zu bestehen, der radial gegen das Werkstück angestellt und zugleich in Axialrichtung des Werkstückes bewegt wird.

Der auf dem Unterschlitten angeordnete Oberschlitten wird bei den bekannten Maschinen von einem elektrischen oder hydraulischen Antrieb bewegt, der auf dem Querschlitten befestigt ist und den Oberschlitten senkrecht zur Radialbewegung des Unterschlittens, also parallel zur Werkstückachse bewegt.

In ähnlicher Weise kann auch an den Längsschlitten ein Zusatzschlitten angebracht sein, mit dem das Werkzeug nicht nur axial, sondern auch radial zum Werkstück bewegt werden kann, beispielsweise, um eine axiale Ausnehmung mit Hinterschneidungen im Werkstück herzustellen.

Diese bekannten Zusatzschlitten an den Längsschlitten und Querschlitten von Drehmaschinen beanspruchen mit ihren zusätzlichen Antrieben viel Platz im Arbeitsraum der Maschine. Außerdem muß jeder Zusatzschlitten mit Leitungen für Arbeits- und Steuermittel versehen sein, die den Arbeitsraum stark einengen, insbesondere dann, wenn bei Mehrspindeldrehautomaten mehrere Querschlitten und Längsschlitten mit Zusatzschlitten versehen werden sollen. Die Anschlüsse dieser Leitungen, die sich mit den Zusatzschlitten ständig bewegen, werden hoch beansprucht und im Laufe der Zeit leicht undicht, was zu Störungen im Arbeitsablauf führt oder Kurzschlüsse zur Folge haben kann, wenn Arbeits- oder Kühlflüssigkeit mit elektrischen Leitungen in Berührung kommt. Außerdem wird der Spänefall in dem durch Leitungen beengten Arbeitsraum beeinträchtigt.

Bei den mit einem Zusatzschlitten ausgerüsteten Längsschlitten besteht der Nachteil, daß der Zusatzschlitten nicht immer genügend steif ist, da er sich bei zunehmendem Axialvorschub immer weiter von seiner Längsführung entfernt. Hierdurch kann nicht immer die gewünschte hohe Genauigkeit bei der Innenbearbeitung von Werkstücken erreicht werden.

Aufgabe der Erfindung ist es, eine Drehmaschine, insbesondere einen Mehrspindeldrehautomaten mit Einzelantrieben für den Werkzeugvorschub so auszubilden, daß der Arbeitsraum durch die Zusatzschlitten für Längsschlitten und Querschlitten nur wenig eingeschränkt, aber gleichwohl eine präzise Bewegung der Werkzeuge auch quer zur Hauptbewegung der als Unterschlitten fungierenden Längs- und Querschlitten erreicht wird.

Diese Aufgabe wird mit der Erfindung dadurch gelöst, daß der Oberschlittenantrieb der Werkzeugvorschubeinrichtung im Maschinengestell angeordnet und rechnergesteuert ist und durch mindestens ein im Arbeitsraum angeordnetes Übertragungselement mit dem Oberschlitten verbunden ist. Hierbei ist als "Oberschlitten" ein Zusatzschlitten bezeichnet, der auf einem als "Unterschlitten" bezeichneten Längs- oder Querschlitten bewegbar ist, wobei der "Oberschlitten" je nach Lage seines Längs- oder Querschlittens im Arbeitsraum natürlich auch unter dem "Unterschlitten" oder seitlich neben ihm angeordnet sein kann.

Die erfindungsgemäße Ausbildung hat den Vorteil, daß der Arbeitsraum in der Maschine nicht durch zusätzliche Schlittenantriebe und deren Energie- und Steuerleitungen eingeengt wird, da dort lediglich die Übertragungselemente angeordnet sind, welche die Oberschlitten mit ihren Oberschlittenantrieben verbinden, während die Schlittenantriebe außerhalb des Arbeitsraumes angeordnet sind.

Obgleich die Übertragungselemente bei ihrer räumlichen Bewegung im Arbeitsraum Größe und Zeitablauf der vom Antrieb auf das Werkzeug zu übertragenden Vorschubbewegung verfälschen, gelingt es durch Verwendung einer Rechnersteuerung, die Stellbefehle für den Antrieb so zu gestalten, daß das Werkzeug die gewünschten axialen und radialen Bewegungen ausführt.

Die Oberschlittenantriebe können seitlich, oberhalb oder unterhalb des Arbeitsraumes im Maschinengestell untergebracht werden. Bei Mehrspindeldrehautomaten, bei denen das Maschinengestell einen Antriebskasten und einen Spindelkasten aufweist, die den Arbeitsraum stirnseitig begrenzen, der von der Spindeltrommelachse durchsetzt wird und in dem die Längsschlitten und Querschlitten der Werkzeugvorschubeinrichtungen angeordnet sind, sind nach der Erfindung alle Oberschlittenantriebe im Antriebskasten der Maschine angeordnet, dessen Stirnwand mit Antriebs- oder Getriebeelementen der Oberschlittenantriebe durchsetzt wird. Mit diesen Getriebeelementen sind die Oberschlittenantriebe dann an die Übertragungselemente im Arbeitsraum angeschlossen, welche die Oberschlitten mit ihren Antrieben verbinden. In diesem Falle werden auch die Oberschlitten der Querschlitten vom Antriebskasten der Maschine aus angetrieben und von Übertragungselementen bewegt, die eine dreidimensionale Bewegung ausführen, sich aber im wesentlichen in Längsrichtung der Spindeltrommelachse bewegen.

Die zweite Führungsachse des Oberschlittens kann quer zur ersten Führungsachse des Unterschlittens angeordnet sein. Wenn der Unterschlitten ein Querschlitten ist, steht die zweite Führungsachse vorzugsweise senkrecht zur ersten Führungsachse.

Bei Zusatzschlitten für Längsschlitten können die erste Führungsachse des Unterschlittens und eine zweite Führungsachse des Oberschlittens in einer diesen beiden Achsen gemeinsamen Ebene liegen, wobei die zweite Führungsachse mit der ersten Führungsachse einen Winkel einschließt, der von 90° verschieden ist. In diesem Falle gleitet der Oberschlitten auf einer schrägen Führungsebene des Unterschlittens und bewegt sich quer zu dessen erster Führungsachse, wenn der Unterschlitten in Längsrichtung bewegt wird, der Oberschlitten aber festgehalten wird. Selbstverständlich kann der Oberschlitten auch gleichzeitig mit dem Unterschlitten in Längsrichtung bewegt werden, wobei das auf dem Oberschlitten befestigte Werkzeug sich nur axial bewegt, jedoch seinen radialen Abstand zur ersten Führungsachse beibehält. Selbstverständlich sind auch Längs- und Querbewegungen des Werkzeuges gleichzeitig möglich, je nachdem, in welchem Verhältnis der als Unterschlitten dienende Längsschlitten und sein schräg auf ihm angeordneter Oberschlitten in Längsrichtung bewegt werden.

Bei einer anderen Ausführungsform einer Drehmaschine nach der Erfindung ist der Oberschlitten auf dem Unterschlitten winkelverdrehbar angeordnet und zusammen mit diesem längs der ersten Führungsachse geradlinig bewegbar und von dem Oberschlittenantrieb um eine Drehachse drehbar. Eine derartige Ausführung ist besonders einfach und leicht dadurch realisierbar, daß der Oberschlitten mit dem Unterschlitten durch den Exzenterbolzen einer auf dem Oberschlitten drehbaren Exzenterscheibe verbunden ist, an der ein zweiter Oberschlittenantrieb mit einem Hebel angreift. Der Oberschlitten kann mit dem ersten Oberschlittenantrieb durch ein Gelenk verbunden sein, welches die Drehachse des Oberschlittens bildet, um den dieser schwenken kann. Der an der Exzenterscheibe befestigte Hebel kann dann zweckmäßig über eine Koppelstange mit zwei Gelenken an den zweiten Oberschlittenantrieb angeschlossen werden. Wenn beide Oberschlittenantriebe gleichzeitig mit gleicher Geschwindigkeit ein- oder ausfahren, bewegt sich das am Oberschlitten befestigte Werkzeug nur axial und erzeugt am sich drehenden Werkstück eine zylindrische Kontur. Wenn jedoch die beiden Oberschlittenantriebe unterschiedliche Längsbewegungen ausführen, wird die Exzenterscheibe in ihrer Ausnehmung im Oberschlitten verdreht und verschwenkt diesen in einem geringen Winkel um dessen Drehgelenk. Das Werkzeug am Oberschlitten führt dann eine radial zur Werkstückspindelachse gerichtete Bewegung aus und schneidet hierdurch in eine innere oder äußere Umfangsfläche des Werkstückes ein, wobei gleichzeitig oder nacheinander auch eine Axialbewegung des Werkzeuges möglich ist, die dann von dem ersten Oberschlittenantrieb erzeugt wird.

Beide vorstehend beschriebenen Einrichtungen eignen sich besonders für die Innenbearbeitung eines in einer Werkstückspindel eingespannten Werkstückes, wobei der Oberschlitten in jeder Lage des Werkzeuges auf dem Unterschlitten sicher gehalten wird.

Das im Arbeitsraum angeordnete jeweilige Übertragungselement kann Teil eines Spindel-Mutter-Triebes sein, welcher dem Oberschlitten eine Längs- bzw. Querbewegung erteilt. Besonders zweckmäßig ist es jedoch, wenn das Übertragungselement eine Koppelstange aufweist, die mit Gelenken an ihren Enden einerseits an den Oberschlitten und andererseits an den Oberschlittenantrieb angeschlossen ist. Eine solche Koppelstangenverbindung ist besonders einfach und robust und gewährleistet auch über lange Zeit hinweg eine sehr exakte Bewegung des Oberschlittens, insbesondere dann, wenn die Koppelstange mit vorgespannten Wälzlagergelenken an den Oberschlitten und an den Oberschlittenantrieb angeschlossen ist. Dies ist dann ohne weiteres möglich, wenn der Oberschlitten und der Oberschlittenantrieb derart zueinander angeordnet sind, daß ihre Anschlußstellen am Übertragungselement in der Arbeitsebene des Werkzeuges oder in einer zur Arbeitsebene des Werkzeuges parallelen Ebene angeordnet sind, so daß das Übertragungselement sich bei der Schlittenbewegung nur in dieser Arbeitsebene oder in einer hierzu parallelen Ebene bewegt. Unter "Arbeitsebene" wird diejenige Ebene verstanden, in der sich bei zweiachsigen Antrieben die Werkzeugschneide bewegt.

Der Oberschlittenantrieb ist zweckmäßig ein rechnergesteuerter Linearantrieb, beispielsweise eine Kolben-Zylinder-Einheit, die in einer zur Werkstückspindelachse parallelen Lage in einem Antriebskasten angeordnet ist. Die auf das Übertragungselement einwirkenden Motor- und Getriebeelemente befinden sich dann zweckmäßig außerhalb des Arbeitsraumes im Antriebskasten. Wenn auch der Unterschlitten der Werkzeugvorschubeinrichtung einen Linearantrieb hat, können alle Antriebe für Unterschlitten und Oberschlitten platzsparend im Antriebskasten untergebracht werden, wobei bei Mehrspindeldrehautomaten die Antriebe für die Oberschlitten ebenso wie die Antriebe für die Unterschlitten der Längsschlitten im Kreis um die Spindeltrommelachse angeordnet und an der Stirnwand zum Arbeitsraum befestigt sein können. Wenn die Längsschlitten und die ihnen zugeordneten Oberschlitten Linearantriebe haben, werden diese zweckmäßig in radialem Abstand voneinander und zur Spindeltrommelachse parallel angeordnet. Die an die Übertragungselemente angeschlossenen Antriebs- oder Getriebeelemente der Oberschlittenantriebe können dann in der Stirnwand des Antriebskastens geführt sein.

Weitere Merkmale und Vorteile der Erfindung ergeben sich aus den Zeichnungen und der nachfolgenden Beschreibung, in der eine bevorzugte Ausführungsform der Erfindung an einem Beispiel näher erläutert ist. Es zeigt:
- Fig. 1: einen Ausschnitt des von den Stirnwänden des Spindelkastens und des Antriebskastens begrenzten Arbeitsraumes eines Mehrspindeldrehautomaten in einer seitlichen Ansicht und teilweise im Schnitt in ersten Arbeitsstellungen der Werkzeuge;
- Fig. 2: einen Teilquerschnitt durch den Arbeitsraum nach Fig. 1 gem. Linie II-II der Fig. 1;
- Fig. 3: eine der Fig. 1 analoge Darstellung des Arbeitsraumes eines Mehrspindeldrehautomaten in zweiten Arbeitsstellungen der Werkzeuge in schematischer Darstellung;
- Fig. 4: eine andere Ausführungsform der Erfindung in einer der Fig. 1 entsprechenden Teildarstellung und
- Fig. 5: den Gegenstand der Fig. 4 in einer Untersicht in Richtung des Pfeiles V gesehen.

In den Zeichnungen ist mit 10 der Arbeitsraum eines Mehrspindeldrehautomaten nach der Erfindung bezeichnet, der an seiner einen Stirnseite von der Stirnwand 11 des Spindelkastens und an seiner anderen Stirnseite von der Stirnwand 12 des Antriebskastens begrenzt wird. Der Spindelkasten 13 und der Antriebskasten 14 sind Teile eines Maschinengestelles mit Maschinenbett und Kopfteil bekannter Bauart, welches hier nicht näher dargestellt ist.

Der Arbeitsraum 10 wird von einer Spindeltrommelachse 15 in seiner Längsrichtung durchsetzt, auf der im Spindelkasten 13 eine drehschaltbare Spindeltrommel 16 gelagert ist, welche die im Kreis angeordneten Werkstückspindeln 17 trägt, in denen die Werkstückstangen oder -rohre 18 eingespannt sind, die bei der Bearbeitung der aus den Werkstückspindeln 17 herausragenden Werkstücke 19 drehend angetrieben werden, wie dies an sich bekannt ist.

Radial außerhalb der Spindeltrommel 16 sind an der Stirnwand 11 des Spindelkastens 13 Konsolen 20 für erste Werkzeugvorschubeinrichtungen 21 angeordnet. Diese ersten Werkzeugvorschubeinrichtungen, von denen in den Zeichnungen nur eine dargestellt ist, bestehen jeweils aus einem Querschlitten 22, der einem Oberschlitten 23 als Unterschlitten dient und einen in den Zeichnungen durch strichierte Linien nur angedeuteten, integrierten Unterschlittenantrieb 24 aufweist. Dieser Unterschlittenantrieb 24 ist ein rechnergesteuerter Elektromotor mit Spindelgetriebe oder ein rechnergesteuerter Hydraulikmotor, mit dem der als Unterschlitten dienende Querschlitten 22 längs einer ersten Führungssachse 25 in einer auf der Konsole 20 angeordneten Gleitführung 26 radial gegen ein zu bearbeitendes Werkstück 19 vorgeschoben werden kann.

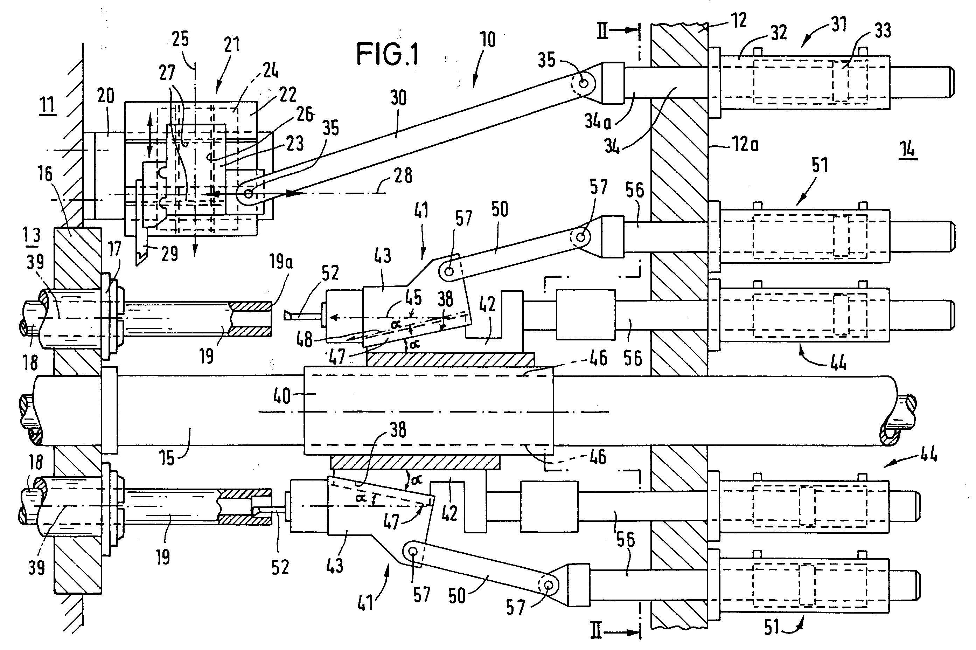

Der Oberschlitten 23 wiederum ist in einer Gleitführung 27 längs einer zweiten Führungsachse 28 senkrecht zur ersten Führungsachse 25 auf dem Unterschlitten 22 verschiebbar, und man erkennt aus Fig. 1, daß diese zweite Führungsachse 28 parallel zur Spindeltrommelachse 15 verläuft.

Der Oberschlitten 23 der ersten Werkzeugvorschubeinrichtung 21 trägt an seinem der Spindeltrommel 16 zugewandten Ende ein Werkzeug 29 in Form eines Stichels, das im folgenden auch als "Querwerkzeug" bezeichnet werden soll, obgleich es nicht nur radial, d.h. quer, sondern auch axial, d.h. längs zum Werkstück 19 arbeiten kann.

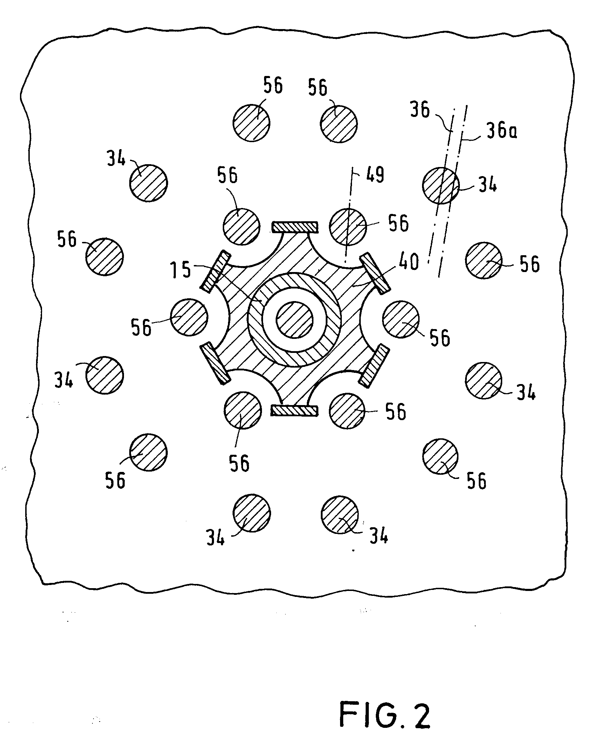

Auf der dem Querschlitten 22 axial gegenüberliegenden Seite des Arbeitsraumes 10 ist im Antriebskasten 14 ein Oberschlittenantrieb 31 untergebracht. Dieser Oberschlittenantrieb 31 besteht bei dem hier dargestellten Ausführungsbeispiel aus einer rechnergesteuerten hydraulischen Kolben-Zylinder-Einheit, deren Hydraulikzylinder 32 auf der Innenseite 12a der Stirnwand 12 des Antriebskastens 14 befestigt ist. Die mit dem Kolben 33 verbundene Kolbenstange 34 durchdringt als Getriebeelement die Stirnwand 12 des Antriebskastens 14, in der sie geführt ist. An ihrem freien, in den Arbeitsraum 10 hineinragenden Ende 34a trägt die Kolbenstange 34 ein vorgespanntes Wälzlagergelenk 35, mit dem ein Übertragungselement 30, nämlich eine Koppelstange, an die Kolbenstange 34 angeschlossen ist. Das andere Ende der Koppelstange 30 ist mit einem gleichen Wälzlagergelenk 35, nämlich einem Nadellager, mit dem Oberschlitten 23 der ersten Werkzeugvorschubeinrichtung 21 gelenkig verbunden. Hierbei ist die Anordnung so getroffen, daß sich die Anschlußstellen des Übertragungselementes 30 am Oberschlitten 22 und am Oberschlittenantrieb 31, nämlich die Wälzlagergelenke 35, in der Arbeitsebene 36 des Werkzeuges 29 oder in einer zu dieser Arbeitsebene parallelen Ebene befinden, in der sich das Übertragungselement 30 bei der Bewegung der ersten Werkzeugvorschubeinrichtung 21 bewegt. Die Arbeitsebene 36 und eine hierzu parallele Ebene 36a ist in Fig. 2 angedeutet.

Wenn das Querwerkzeug 29 an dem ihm zugeordneten und sich mit der Werkstückspindel 17 drehenden Werkstück 19 eine Bearbeitung vornehmen soll, die eine Radialbewegung und eine Axialbewegung in bezug auf das Werkstück 19 erfordert, wird der Querschlitten 22 längs seiner ersten Führungsachse 25 in Pfeilrichtung vorgeschoben, wodurch das Querwerkzeug 29 in den Außenumfang des Werkstückes 19 radial einschneidet und hierbei zunächst eine V-förmige Umfangsnute 37 erzeugt. Dieser Quervorschub des Querschlittens 22 wird von dem hydraulischen Unterschlittenantrieb 24 erzeugt, der den Querschlitten 22 in seiner Gleitführung 26 auf der Konsole 20 verschiebt.

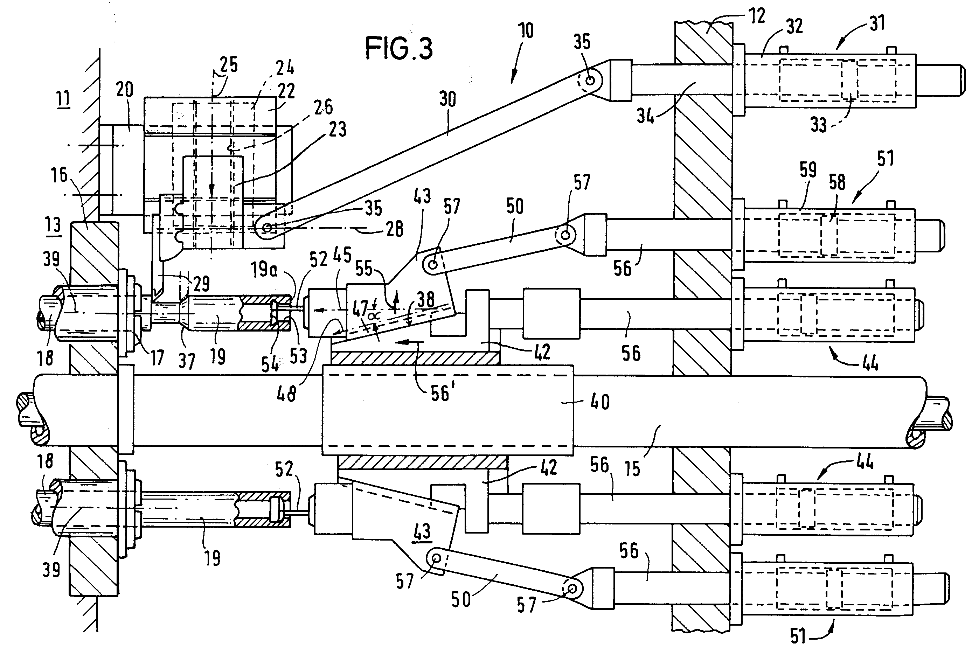

Um die V-förmige Umfangsnute 37 zum eingespannten Ende des Werkstückes zu erweitern, wird nun der Oberschlitten 23 von seinem Oberschlittenantrieb 31 längs der zweiten Führungsachse 28 in Pfeilrichtung axial vorgeschoben. Das Querwerkzeug 29 trägt dann vom Außenumfang des Werkstückes weiteres Material ab, wobei es in dessen Axialrichtung arbeitet, bis die in Fig. 3 dargestellte Umfangsnut am Werkstück 19 hergestellt ist.

Man erkennt, daß sich die als Übertragungselement wirkende Koppelstange 30 sowohl bei einer Bewegung des als Unterschlitten dienenden Querschlittens 22, als auch bei einer Bewegung des Oberschlittens 23 in ihrer Längsrichtung bewegt und zugleich eine Schwenkbewegung ausführt. Diese Längs- und Schwenkbewegungen vollziehen sich jedoch, dank der entsprechenden Zuordnung der Werkzeugvorschubeinrichtung 21 zum Oberschlittenantrieb 31, nur in einer Ebene.

Selbstverständlich ist es auch möglich, die Radialbewegung längs der ersten Führungsachse 25 und die Axialbewegung längs der zweiten Führungsachse 28 gleichzeitig ablaufen zu lassen, beispielsweise, um eine in Längsrichtung gekrümmte Außenkontur am Werkstück herzustellen. Der Unterschlittenantrieb 24 und der Oberschlittenantrieb 31 müssen dann nur entsprechend aufeinander abgestimmt gesteuert werden, was mit der erfindungsgemäß verwendeten Rechnersteuerung ohne weiteres möglich ist.

Für die stirnseitige Bearbeitung und für eine Innenbearbeitung des Werkstückes 19 sind zweite Werkzeugvorschubeinrichtungen 41 vorgesehen, welche zu Längsschlitten 42 gehören, die in Gleitführungen 46 eines Längsschlittenblockes 40 längs einer ersten Führungsachse 45 axial zur Werkstückspindelachse 39 verschiebbar sind. Der Längsschlittenblock 40 wird von der den Arbeitsraum 10 durchsetzenden Spindeltrommelachse 15 getragen.

Jeder Längsschlitten 42 hat einen eigenen rechnergesteuerten Unterschlittenantrieb 44 und trägt einen Oberschlitten 43, der in einer Gleitführung 47 auf der Oberseite 38 des Längsschlittens verschiebbar ist. Die Oberseite 38 des Längsschlittens 42 ist unter einem Winkel α gegenüber der ersten Führungsachse 45 geneigt, so daß sich der Oberschlitten 43 längs einer zweiten Führungsachse 48 bewegt, die mit der ersten Führungsachse 45 einen Winkel α einschließt, der von 90° verschieden und vorzugsweise ein spitzer Winkel ist.

Die schräge, zur Stirnseite 19a des Werkstückes 19 hin geneigte Oberseite 38 des als Unterschlitten dienenden Längsschlittens 42 ist so angeordnet, daß die von der ersten Führungsachse 45 und der zweiten Führungsachse 48 aufgespannte Ebene auf der schrägen Oberseite 38 des Längsschlittens senkrecht steht.

Man erkennt aus den Fig. 1 und 3, daß der Oberschlitten 43 eines jeden Längsschlittens 42 mit einem Übertragungselement 50, nämlich einer Koppelstange, an einen Oberschlittenantrieb 51 angeschlossen ist, der ebenso wie der Oberschlittenantrieb 31 als rechnergesteuerter, hydraulischer Linearantrieb ausgebildet ist und hier nicht noch einmal beschrieben werden muß.

An dem der freien Stirnseite 19a des Werkstückes 19 zugewandten Ende eines jeden Oberschlittens 43 ist ein Werkzeug 52 befestigt, das im folgenden auch als "Längswerkzeug" bezeichnet werden soll und mit dem eine stirnseitige Bearbeitung des Werkstückes 19 und eine Innenbearbeitung durchgeführt werden kann. Um beispielsweise eine zentrische Ausnehmung in der Stirnseite 19a des Werkstückes 19 herzustellen, wird die zweite Werkzeugvorschubeinrichtung 41 mit dem daran befestigten Längswerkzeug 52 längs der ersten Führungsachse 45 in Pfeilrichtung vorgeschoben, wobei Oberschlitten 43 und Unterschlitten 42 ihre gegenseitige Lage zueinander nicht verändern. Dies bedeutet, daß der Unterschlittenantrieb 44 und der Oberschlittenantrieb 51 der jeweiligen zweiten Vorschubeinrichtung gleichzeitig den gleichen Vorschub ausführen müssen, wobei dann nur der Längsschlitten 42 sich in seiner Gleitführung 46 bewegt. Ein solcher reiner Axialvorschub des Längswerkzeuges 52 ist in der unteren Hälfte der Fig. 1 dargestellt.

Soll das Längswerkzeug 52 in der Öffnung 53 eines rohrförmigen Werkstückes 19 eine Ansenkung herstellen, muß das Längswerkzeug 52 quer zu seiner Längsrichtung, d.h. radial zum Werkstück 19 in der Rohröffnung 53 bewegt werden. Diese Radialbewegung in Richtung des Pfeiles 55 wird dadurch erreicht, daß der Unterschlitten oder Längsschlitten 42 in Axialrichtung in Pfeilrichtung 56' von dem Unterschlittenantrieb 44 vorgeschoben wird. Hierbei gleitet der Oberschlitten 43 in seiner Gleitführung 47 auf der schrägen Oberseite 38 des Unterschlittens 42 nach oben und bewegt sich hierbei gegenüber der Spindeltrommelachse 15 im Arbeitsraum 10 radial nach außen, so daß auch das Längswerkzeug 52 eine entsprechende Querbewegung ausführt und von innen her in die innere Umfangswand der Rohröffnung 53 einschneidet.

Bei der Radialbewegung des Oberschlittens 43 verändert sich auch die Lage der Anschlußstelle 57 des Übertragungselementes 50. Da dieses Übertragungselement 50 längenunveränderlich ist und spielfrei an ein Antriebselement 56 des Oberschlittenantriebes 51 angeschlossen ist, muß auch dessen Kolben 58 sich in seinem Zylinder 59 bewegen können. Dieser Bearbeitungsvorgang ist in der oberen Hälfte der Fig. 3 dargestellt.

Soll das Längswerkzeug 52 die Ansenkung 54 im rohrförmigen Werkstück 19 erweitern, wie dies in der unteren Hälfte der Fig. 3 dargestellt ist, ist es notwendig, den Unterschlitten 42 und den Oberschlitten 43 gleichzeitig zurückzuziehen. Hierbei darf das Längswerkzeug 52 keine Querbewegung ausführen, wenn die Innenwandung der Erweiterung zylindrisch sein soll. Sollen dagegen innere Öffnungen im Werkstück mit kegeligen oder anders geformten Umfangsflächen hergestellt werden, können Unterschlittenantrieb 44 und Oberschlittenantrieb 51 der gleichen zweiten Werkzeugvorschubeinrichtung auch mit unterschiedlichen Geschwindigkeiten bewegt werden. Die Schneidkante des Längswerkzeuges 52 kann dann jede gewünschte Kontur einer inneren Öffnung herstellen.

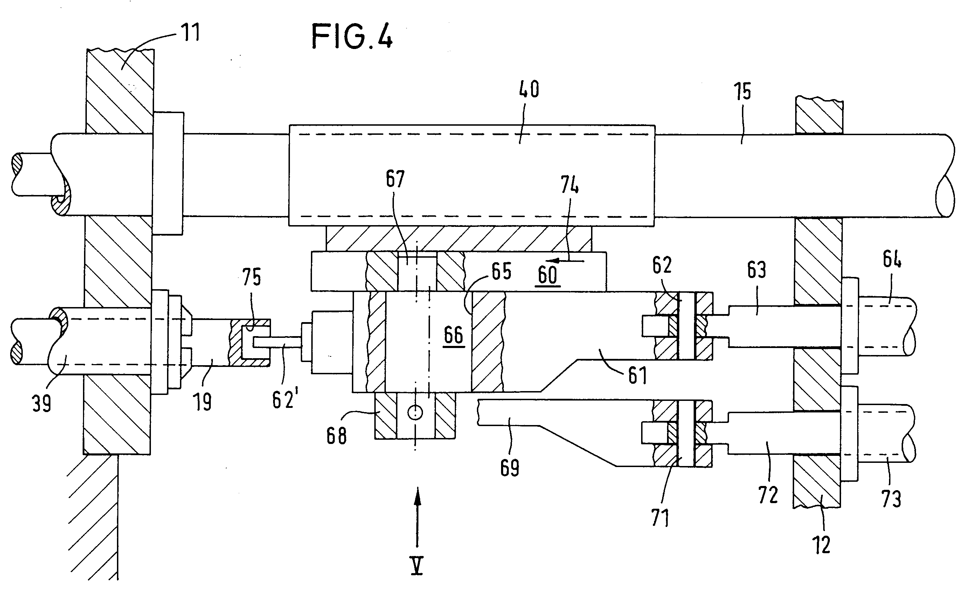

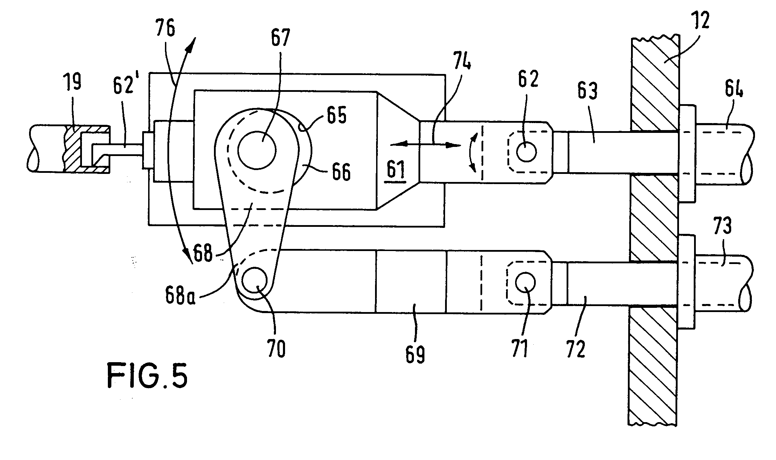

Bei der in den Fig. 4 und 5 dargestellten Ausführungsform hat der auf dem Längsschlittenblock 40 axial bewegliche Unterschlitten 60 keinen eigenen Antrieb, sondern trägt nur den Oberschlitten 61, an dem das Werkzeug 62' befestigt ist. Der Oberschlitten 61 ist an seinem hinteren Ende durch ein Drehgelenk 62 mit dem Antriebselement 63 eines rechnergesteuerten ersten Oberschlittenantriebes 64 verbunden, der wie bei den zuvor beschriebenen Ausführungsbeispielen ein hydraulischer Hubkolbenantrieb ist.

Der Oberschlitten 61 hat in seinem vorderen Teil eine zylindrische Ausnehmung 65, in der eine Exzenterscheibe 66 drehbar ist, die an ihrem oberen Ende einen Exzenterbolzen 67 trägt, mit der sie im Unterschlitten 60 drehbar gelagert ist. An ihrer Unterseite ist die Exzenterscheibe mit einem Hebel 68 undrehbar verbunden, der seitlich über den Oberschlitten 61 hinausragt und an dessen freiem Ende 68a ein Übertragungselement 69 in Form einer Koppelstange über ein erstes Gelenk 70 angeschlossen ist. Die Koppelstange 69 wiederum ist über ein zweites Gelenk 71 an das Antriebselement 72 eines zweiten Oberschlittenantriebes 73 angeschlossen, der ebenso ausgebildet ist, wie der erste Oberschlittenantrieb 64.

Wenn beide Oberschlittenantriebe 64 und 73 ihre Antriebselemente 63 und 72 gleichsinnig und mit gleicher Geschwindigkeit ausfahren, bewegt sich der Oberschlitten 61 zusammen mit dem Unterschlitten 60 geradlinig längs einer ersten Führungsachse 74, die zur Spindeltrommelachse 15 parallel ist. Das Werkzeug 62' führt dann ebenfalls eine reine Axialbewegung aus und erzeugt in dem sich drehenden Werkstück 19 eine zylindrische Ausnehmung 75. Oberschlitten 61 und Unterschlitten 60 verändern hierbei ihre gegenseitige Lage zueinander nicht.

Wenn jedoch die Oberschlittenantriebe 64 und 73 ihre Antriebselemente 63 und 72 mit unterschiedlicher Geschwindigkeit ausfahren, entsteht eine Relativbewegung zwischen dem Oberschlitten 61 und der Koppelstange 69. Die Koppelstange 69 verdreht dann über den Hebel 68 die Exzenterscheibe 66 in ihrer zylindrischen Ausnehmung 65, wodurch der Oberschlitten 61 um die Drehachse des Drehgelenkes 62 eine Schwenkbewegung in Richtung des Pfeiles 76 ausführt. Gleichzeitig bewegt sich der Oberschlitten 61 auch axial in Richtung der ersten Führungsachse 74. Diese Axialbewegung kann durch Ausfahren oder Einfahren des Antriebselementes 63 ausgeglichen werden, so daß das Werkzeug 62 im Werkstück 19 nur eine Radialbewegung ausführt.

Auch mit der in den Fig. 4 und 5 dargestellten Ausführungsform können im Werkstück 19 Ausnehmungen mit verschiedenen Innenkonturen hergestellt werden.

Man erkennt, daß die Unter- und Oberschlitten der als Querschlitten und Längsschlitten arbeitenden Werkzeugvorschubeinrichtungen nach einem vorgegebenen Programm mit einer Rechnersteuerung so angetrieben werden können, daß sowohl die Querwerkzeuge als auch die Längswerkzeuge praktische jede Kontur am Werkstück abfahren können, so daß eine sehr genaue Fertigung auch komplizierter Werkstücke im automatischen Verfahren möglich ist. Man erkennt, daß auch die Oberschlitten der Längsschlitten sich während eines Bearbeitungsvorganges kaum verformen, da die Oberschlitten bei größtmöglicher Ausladung der Werkzeuge ihre Führung auf ganzer Länge beibehalten. Hierdurch wird auch die Führungsgenauigkeit erhöht.

Die Erfindung ist nicht auf die dargestellten und beschriebenen Ausführungsbeispiele beschränkt, sondern es sind mehrere Änderungen und Ergänzungen möglich, ohne den Rahmen der Erfindung zu verlassen. Beispielsweise können anstelle der Koppelstangen auch andere Übertragungselemente, wie beispielsweise Schraubenspindeln verwendet werden, mit denen die Oberschlitten auf ihren Unterschlitten von einer entfernten Stelle des Maschinengestelles aus bewegt werden. Ferner müssen die Antriebe für die Oberschlitten nicht unbedingt im Antriebskasten untergebracht sein, sie können sich auch im Maschinenbett unterhalb des Arbeitsraumes oder im Kopfbalken des Maschinengestelles befinden. Wesentlich ist nur, daß die Zusatzantriebe für die Oberschlitten der Längs- und Querschlitten sich nicht im Arbeitsraum der Maschine befinden. Die Zusatzschlitten und ihre Antriebe können auch nachträglich in bereits vorhandene Maschinen eingebaut werden.

Die Erfindung kann nicht nur bei Mehrspindeldrehautomaten, sondern auch bei anderen Drehmaschinen Verwendung finden, die mit einer in zwei Richtungen bewegbaren Werkzeugvorschubeinrichtung arbeiten.

Schließlich ist es auch denkbar, die Oberschlitten der Querschlitten ebenso wie die Oberschlitten der Längsschlitten auf schrägen Führungsflächen der Unterschlitten anzuordnen und die Oberschlitten auf diesen Schrägflächen in der gleichen Richtung zu bewegen wie die sie tragenden Unterschlitten. Die Antriebe für die Unterschlitten und Oberschlitten der Querschlitten können dann auch außerhalb der Spindeltrommel im Spindelkasten oder an anderer Stelle außerhalb des Arbeitsraumes im Maschinengestell untergebracht sein.

## Patentansprüche

1. Drehmaschine, insbesondere Mehrspindeldrehautomat mit einem einen Arbeitsraum umgebenden Maschinengestell, mit mindestens einer Werkstückspindel und mit mindestens einer Werkzeugvorschubeinrichtung, die einen längs einer ersten Führungsachse bewegbaren Unterschlitten und einen von einem Oberschlittenantrieb längs einer zweiten Führungsachse auf dem Unterschlitten bewegbaren Oberschlitten aufweist, der ein Werkzeug trägt, **dadurch gekennzeichnet, daß** der Oberschlittenantrieb (31, 51) der Werkzeugvorschubeinrichtung (21, 41) im Maschinengestell angeordnet und rechnergesteuert ist und durch mindestens ein im Arbeitsraum (10) angeordnetes Übertragungselement (30, 50) mit dem Oberschlitten (23, 43) verbunden ist.

2. Maschine nach Anspruch 1, **dadurch gekennzeichnet, daß** die zweite Führungsachse (28) des Oberschlittens (23) quer zur ersten Führungsachse (25) des Unterschlittens (22) angeordnet ist.

3. Maschine nach Anspruch 1 oder 2, **dadurch gekennzeichnet, daß** die zweite Führungsachse (48) des Oberschlittens (43) und die erste Führungsachse (45) des Unterschlittens (42) in einer diesen beiden Achsen (45 u. 48) gemeinsamen Ebene (49) liegen und daß die zweite Führungsachse (48) mit der ersten Führungsachse (45) einen Winkel (α) einschließt, der von 90° verschieden ist.

4. Maschine nach einem der Ansprüche 1 bis 3, **dadurch gekennzeichnet, daß** der Oberschlitten (43) auf einer schrägen Oberfläche (38) des Unterschlittens (42) verschiebbar ist, die unter einem von 90° abweichenden Winkel (α) gegenüber einer Gleitführung (46) des Unterschlittens (42) geneigt ist.

5. Maschine nach einem der Ansprüche 1 bis 4**, dadurch gekennzeichnet, daß** die Führungsachse (48) des Oberschlittens (43) in etwa der gleichen Richtung verläuft wie die Führungsachse (45) des Unterschlittens (42).

6. Maschine nach einem der Ansprüche 1 bis 5, **dadurch gekennzeichnet, daß** das Übertragungselement (30) Teil eines Spindel-Mutter-Triebes ist.

7. Maschine nach einem der Ansprüche 1 bis 5, **dadurch gekennzeichnet, daß** das Übertragungselement (30, 50) eine Koppelstange aufweist, die mit Gelenken (35) an ihren Enden einerseits an den Oberschlitten (23, 43) und andererseits an den Oberschlittenantrieb (31, 51) angeschlossen ist.

8. Maschine nach einem der Ansprüche 1 bis 7, **dadurch gekennzeichnet, daß** der Oberschlitten (23, 43) und der Oberschlittenantrieb (31, 51) derart zueinander angeordnet sind, daß ihre Anschlußstellen (35, 57) am Übertragungselement (30, 50) in der Arbeitsebene (36) des Werkzeuges (29, 52) oder in einer zur Arbeitsebene (36) des Werkzeuges (29, 52) parallelen Ebene (36a) angeordnet sind und daß das Übetragungselement (30, 50) sich bei der Schlittenbewegung nur in dieser Arbeitsebene (36) oder in der hierzu parallelen Ebene (36a) bewegt.

9. Maschine nach einem der Ansprüche 1 bis 8, **dadurch gekennzeichnet, daß** die Koppelstange (30), 50) mit vorgespannten Wälzlagergelenken (35) an den Oberschlitten (23, 43) und an den Oberschlittenantrieb (31, 51) angeschlossen ist.

10. Drehmaschine, insbesondere Mehrspindeldrehautomat mit einem einen Arbeitsraum umgebenden Maschinengestell mit mindestens einer Werkstückspindel und mit mindestens einer Werkzeugvorschubeinrichtung, die einen längs einer ersten Führungsachse bewegbaren Unterschlitten und einen von einem Oberschlittenantrieb auf dem Unterschlitten bewegbaren Oberschlitten aufweist, der ein Werkzeug trägt, **dadurch gekennzeichnet, daß** der Oberschlitten (61) auf dem Unterschlitten (60) winkelverdrehbar angeordnet ist und zusammen mit diesem längs der ersten Führungsachse (45) geradlinig bewegbar und von dem Oberschlittenantrieb (73) um eine Drehachse (62) drehbar ist.

11. Drehmaschine nach Anspruch 10, **dadurch gekennzeichnet, daß** der Oberschlitten (61) längs der ersten Führungsachse (45) von einem ersten Oberschlittenantrieb (64) geradlinig bewegbar und von einem zweiten Oberschlittenantrieb (73) um die Drehachse (62) drehbar ist.

12. Drehmaschine nach Anspruch 10 oder 11, **dadurch gekennzeichnet, daß** der Oberschlitten (61) mit dem Unterschlitten (60) durch den Exzenterbolzen (67) einer im Oberschlitten (61) drehbaren Exzenterscheibe (66) verbunden ist, an der der zweite Oberschlittenantrieb (73) mit einem Hebel (68) angreift.

13. Drehmaschine nach einem der Ansprüche 10 bis 12, **dadurch gekennzeichnet, daß** der Oberschlitten (61) mit dem ersten Oberschlittenantrieb (64) durch ein Gelenk (62) verbunden ist, welches die Drehachse (62) des Oberschlittens (61) bildet und daß der an der Exzenterscheibe (66) befestigte Hebel (68) über eine Koppelstange (69) mit zwei Gelenken (68, 71) an den zweiten Oberschlittenantrieb (73) angeschlossen ist.

14. Maschine nach einem der Ansprüche 1 bis 13, **dadurch gekennzeichnet, daß** der Oberschlittenantrieb (31, 51) ein Linear-Antrieb ist.

15. Maschine nach einem der Ansprüche 1 bis 14, **dadurch gekennzeichnet, daß** die auf das Übertragungselement (30, 50) einwirkenden Motor- und Getriebeelemente (34, 56) des Oberschlittenantriebs (31, 51) außerhalb des Arbeitsraumes (10) in einem Antriebskasten (14) angeordnet sind.

16. Maschine nach einem der Ansprüche 1 bis 15, **dadurch gekennzeichnet, daß** der Oberschlittenantrieb (31, 51) eine Kolben-Zylinder-Einheit ist, die in einer zur Werkstückspindelachse (39) parallelen Lage in einem Antriebskasten (14) angeordnet ist.

17. Maschine nach einem der Ansprüche 1 bis 16, **dadurch gekennzeichnet, daß** der Oberschlitten (23, 43) und der Unterschlitten (24, 42) der Werkzeugvorschubeinrichtung (21, 41) Linearantriebe haben.

18. Mehrspindeldrehautomat mit einem Maschinengestell, das einen Antriebskasten und einen Spindelkasten aufweist, die einen Arbeitsraum stirnseitig begrenzen, der von der Spindeltrommelachse durchsetzt wird und in dem die Längsschlitten und Querschlitten der Werkzeugvorschubeinrichtungen angeordnet sind, von denen mindestens einzelne mit einem eigenen Antrieb versehene Oberschlitten aufweisen, die ein Werkzeug tragen, **dadurch gekennzeichnet, daß** alle Oberschlittenantriebe (31, 51) im Antriebskasten (14) der Maschine angeordnet sind und dessen Stirnwand (12) mit Antriebs- oder Getriebeelementen (34, 56) durchsetzen, mit denen sie an Übertragungselemente (30, 50) im Arbeitsraum (10) angeschlossen sind, welche die Oberschlitten (23, 43) mit ihren Antrieben (31, 51) verbinden.

19. Automat nach Anspruch 18, **dadurch gekennzeichnet, daß** die Antriebe (31, 51) für die Oberschlitten (23, 43) im Kreis um die Spindeltrommelachse (15) angeordnet und an der Stirnwand (12) zum Arbeitsraum (10) befestigt sind.

20. Automat nach Anspruch 18 oder 19, **dadurch gekennzeichnet, daß** die Längsschlitten (42) und die ihnen zugeordneten Oberschlitten (43) Linearantriebe (44, 51) haben, die in radialem Abstand voneinander und zur Spindeltrommelachse (15) parallel angeordnet sind.

21. Automat nach einem der Ansprüche 18 bis 20, **dadurch gekennzeichnet, daß** die an die Übertragungselemente (30) angeschlossenen Antriebs- oder Getriebeelemente (34) der Oberschlittenantriebe (31) in der Stirnwand (12) des Antriebskastens (14) geführt sind.

22. Automat nach einem der Ansprüche 18 bis 21, **dadurch gekennzeichnet, daß** alle Werkzeugschlitten (22, 23; 42, 43) rechnergesteuerte Einzelantriebe (24, 31; 44, 51) haben.
